# EUROPÄISCHE PATENTSCHRIFT

(11) **EP 1 472 506 B1**
(45) Veröffentlichungstag und Bekanntmachung des Hinweises auf die Patenterteilung: **28.11.2018**
(21) Anmeldenummer: 02781106.6
(22) Anmeldetag: 23.09.2002
(51) Int. Cl.: G01C 19/5747

(54) **MIKROMECHANISCHER DREHRATENSENSOR**
MICROMECHANICAL ROTATION SPEED SENSOR
CAPTEUR DE VITESSE DE ROTATION MICROMECANIQUE

(30) Priorität: 30.01.2002 DE 10203515
(43) Veröffentlichungstag der Anmeldung: 03.11.2004
(73) Patentinhaber: ROBERT BOSCH GMBH, 70442 Stuttgart (DE)
(72) Erfinder: WILLIG, Rainer, 71732 Tamm (DE); THOMAE, Andreas, Anderson, 29625 (US); KUHLMANN, Burkhard, 72800 Eningen (DE); HAUER, Joerg, 72762 Reutlingen (DE); GOMEZ, Udo-Martin, 71229 Leonberg (DE); GOETZ, Siegbert, 70839 Gerlingen (DE); DOERING, Christian, 70563 Stuttgart (DE); FEHRENBACH, Michael, 72766 Mittelstadt (DE); BAUER, Wolfram, 72074 Tuebingen (DE); BISCHOF, Udo, 72827 Wannweil (DE); NEUL, Reinhard, 70567 Stuttgart (DE); FUNK, Karsten, Palo Alto, CA 94304 (US); LUTZ, Markus, Palo Alto, CA 94306 (US); WUCHER, Gerhard, 72762 Reutlingen (DE); FRANZ, Jochen, 72762 Reutlingen (DE)
(86) Internationale Anmeldenummer: PCT/DE2002/003570
(87) Internationale Veröffentlichungsnummer: WO 2003/064975

(56) Entgegenhaltungen:
- EP-A- 0 990 872
- WO-A-98/15799
- DE-A- 4 428 405
- DE-A- 19 530 007

## Beschreibung

### STAND DER TECHNIK

Die vorliegende Erfindung betrifft einen mikromechanischen Drehratensensor.

Aus der US-A-5, 728, 936 ist ein Drehratensensor bekannt, bei dem auf der Oberfläche eines Substrats ein erstes und ein zweites Coriolis-Element angeordnet sind. Die Coriolis-Elemente werden zu Schwingungen entlang einer ersten Achse angeregt. Die Auslenkungen der Coriolis-Elemente aufgrund der Coriolis-Kraft entlang einer zweiten Achse, die ebenfalls parallel zum Substrat ist, werden nachgewiesen.

Die DE 44 28 405 A1 offenbart einen Drehratensensor bestehend aus mindestens zwei Schwingmassen, welche über Federelemente miteinander zu einem schwingungsfähigen System verbunden sind.

Aus der WO 98 157 99 A1 ist ein Drehratensensor zur Erfassung einer Drehung desselben bekannt. Der Drehratensensor umfasst einem Grundkörper; einem Primarschwinger, der durch eine Anregung in eine Primärbewegung versetzbar ist und einem Sekundärschwinger, der durch eine Coriolis-Kraft in eine Sekundärbewegung versetzbar ist.
Die DE 198 32 906 C1 beschreibt einen kapazitiven Drehratensensor bestehend aus einer federnd gelagerten spiegelsymmetrisch ausgebildeten seismischen Masse, an der kammartig Elektroden befestigt sind. Es sind mindestens zwei Gruppen von spiegelsymmetrisch angeordneten kammartigen Gegenelektroden vorgesehen, die jeweils an einem Träger befestigt sind und zwischen die an der seismischen Masse befestigten Elektroden eingreifen. Die Träger der Gegenelektroden sind allein im Bereich der Symmetrieachse am nächstliegenden Punkt auf einem Keramikträger befestigt. Weiterhin ist ein Rahmen vorgesehen, an dem über zwei Blattfedern die seismische Masse befestigt ist. Zwei Aktoren dienen zur Schwingungsanregung des Rahmens, der integrierte Schwingfedern aufweist und der mindestens an zwei Haltepunkten auf dem Keramikträger befestigt ist.

Die EP 0 775 290 B1 offenbart einen Drehratensensor bestehend aus mindestens zwei Schwingmassen, welche über Federelemente miteinander zu einem schwingungsfähigen System verbunden sind, welches auf einem Substrat gehaltert wird. Weiterhin sind Aktoren zum Anregen von Schwingungen sowie mindestens ein Aufnehmer für den Nachweis der Corioliskraft vorgesehen. Die Federelemente und die Schwingmassen sind derart angeordnet und ausgebildet, dass das schwingungsfähige System nur Schwingungen in mindestens zwei Schwingungsmoden parallel zur Substratebene ausführen kann, wobei eine Mode als Anregungsmode der Schwingungsanregung dient und die zweite vorzugsweise dazu orthogonale Mode als Detektionsmode bei Drehung um eine Achse senkrecht zum Substrat zur Corioliskräfte angeregt wird.

Aus M. Lutz, W. Golderer, J. Gerstenmeier, J. Marek, B. Maihöfer und D. Schubert, A Precision Yaw Rate Sensor in Silicon Micromachining; SAE Technical Paper, 980267 und aus K. Funk, A. Schilp, M. Offenberg, B. Elsner, und F. Lärmer, Surface-micromachining of Resonant Silicon Structures; The 8th International Conference on Solid-State Sensors and Actuators, Eurosensors IX, Stockholm, Schweden, 25.-29. Juni 1995, Seiten 50-52 sind weitere Drehratensensoren bekannt.

Ein Nachteil der bekannten Drehratensensoren liegt in der Sensitivität der Strukturen gegenüber Störbeschleunigungen, insbesondere gegenüber Drehbeschleunigungen um die sensitive Achse, sowie in der unzureichenden Robustheit der Strukturen.

Ein Grund für die Sensitivität gegenüber Störbeschleunigungen ist insbesondere in der geringen Arbeitsfrequenz dieser Drehratensensoren (1,5 kHz bis 6 kHz) begründet, da in diesem Frequenzbereich im Kraftfahrzeug Störbeschleunigungen mit nicht zu vernachlässigenden Amplituden auftreten können.

Ein weiterer Grund ist mit den Funktionsprinzipien von Drehratensensoren verknüpft. Bei einem bestimmten Sensortyp wird außer durch eine (gewünschte) äußere Drehgeschwindigkeit um die sensitive Achse auch durch eine Drehbeschleunigung um dieselbe Achse ein Messsignal ausgelöst. Die bekannten Drehratensensoren sind daher besonders empfindlich auf diese Art von Störbeschleunigung.

Die niedrigen Arbeitsfrequenzen sind ebenfalls ein Grund für die unzureichende Robustheit der Drehratensensoren, insbesondere was die Fallsicherheit betrifft. Ein weiterer Grund für die unzureichende Robustheit liegt in einer komplizierten Prozessführung, beispielsweise einer Kombination von Bulk- und Oberflächenmikromechanik.

### VORTEILE DER ERFINDUNG

Die der vorliegenden Erfindung zugrundeliegende Idee besteht darin, daß die Schwerpunkte des ersten Coriolis-Massenelements, des zweiten Coriolis-Massenelements, der ersten Erfassungs-Masseneinrichtung und der zweiten Erfassungs-Masseneinrichtung im Ruhezustand in einem gemeinsamen Massenschwerpunkt zusammenfallen. Betreibt man einen derartig aufgebauten Drehratensensor mit einer gegenphasigen Anregung, welche eine entgegengesetzte Auslenkung der ersten Erfassungs-Masseneinrichtung und der zweiten Erfassungs-Masseneinrichtung unter dem Einfluß einer Corioliskraft bewirkt, so lassen sich Fremdeinflüsse von externen Linearbeschleunigungen oder Zentrifugalbeschleunigungen beseitigen, da diese lediglich eine gleichgerichtete Auslenkung der ersten Erfassungs-Masseneinrichtung und der zweiten Erfassungs-Masseneinrichtung nach sich ziehen. Außerdem bewirken Drehbeschleunigungen um die Sensierachse keine Auslenkung und haben somit keinen Einfluß.

Der erfindungsgemäße mikromechanische Drehratensensor mit den Merkmalen des Anspruchs 1 weist also gegenüber den bekannten Lösungsansätzen den besonderen Vorteil auf, daß Störempfindlichkeit und Querempfindlichkeit, Robustheit sowie Auflösungsbereich (Fahrdynamikbereich) stark verbessert sind. Erreicht wird dies durch die Wahlmöglichkeit einer hohen Arbeitsfrequenz und durch die speziellen symmetrischen Ausführungen der Sensormassenelemente.

Die beschriebene Struktur ist für eine Fertigung in reiner Oberflächenmikromechanik ausgelegt, eine Umsetzung der Funktionsprinzipien auf andere Technologien (Bulk-Mikromechanik, LIGA, etc.) ist jedoch leicht möglich. Das Sensorelement ist derart gestaltet, dass gegenüber einem Siliziumsubstrat, welches gleichzeitig als Referenz-Koordinatensystem dient, beweglich aufgehängte seismische Massen parallel zur Substratebene in Schwingungen versetzt werden. Eine um die Substratnormale wirkende äußere Drehrate erzeugt eine Coriolis-Beschleunigung auf die bewegten Massen senkrecht zur Bewegungsrichtung und senkrecht zur Substratnormalen, das heißt ebenfalls parallel zur Substratebene. Es handelt sich demnach bei dem hier beschriebenen System um ein In-Plane/In-Plane-Linearschwingersystem.

Bei der hier beschriebenen Struktur kommen gleichzeitig das Stimmgabelprinzip sowie das inverse Stimmgabelprinzip zur Geltung. Die beschriebene Struktur ist für Arbeitsfrequenzen > 10 kHz ausgelegt. Dies führt zu einer weiteren Reduktion der Störempfindlichkeit der Sensorelemente für den Fall eines Einsatzes im Automobilbereich, da insbesondere Störbeschleunigungen im Fahrzeug in diesem Frequenzbereich deutlich reduziert sind gegenüber dem bisher genutzten Frequenzbereich von typischerweise 1,5 kHz bis 6 kHz. Die Wahl der Arbeitsfrequenz führt weiterhin zu wesentlich robusteren Sensorstrukturen mit erhöhter Fallsicherheit. Eine Aufhängung an zahlreichen gefalteten Federelementen trägt ebenfalls zur Robustheit bei.

Als Funktionsprinzip werden hier sowohl das Stimmgabelprinzip als auch das inverse Stimmgabelprinzip realisiert. Bei der Ausführungsform fallen die Massenschwerpunkte der Einzelmassen in Ruhelage mit dem Masseschwerpunkt der gesamten Schwingstruktur in Ruhelage zusammen. Der Antrieb und die Detektion erfolgen bevorzugt orthogonal zueinander in der Substratebene um den gemeinsamen Masseschwerpunkt. Die Lage des Masseschwerpunkts der gesamten Schwingstruktur ist bezüglich des Substrats im Normalbetrieb zeitinvariant. Der Vorteil dieses Funktionsprinzips gegenüber den bekannten Prinzipien besteht darin, dass im Idealfall sowohl eine Drehbeschleunigung um die Z-Achse keinen Messeffekt hervorruft als auch bei geeigneter Auslegung Zentrifugalbeschleunigungen um die Z-Achse und Linearbeschleunigungen in Sensierrichtung ebenfalls keinen Messeffekt hervorrufen, wodurch weitere Störquellen unterdrückbar sind.

In den abhängigen Ansprüchen finden sich vorteilhafte Weiterbildungen und Verbesserungen des in Anspruch 1 angegebenen mikromechanischen Drehratensensors.
Gemäß einer bevorzugten Weiterbildung ist die erste Erfassungs-Masseneinrichtung über erste Federn, die entlang der ersten Achse weich und entlang der zweiten Achse hart ausgebildet sind, mit dem ersten Coriolis-Massenelement verbunden und über zweite Federn, die entlang der ersten Achse hart und entlang der zweiten Achse weich ausgebildet sind, mit dem Substrat verbunden. Gleichzeitig ist die zweite Erfassungs-Masseneinrichtung über dritte Federn, die entlang der ersten Achse weich und entlang der zweiten Achse hart ausgebildet sind, mit dem zweiten Coriolis-Massenelement verbunden und über vierte Federn, die entlang der ersten Achse hart und entlang der zweiten Achse weich ausgebildet sind, mit dem Substrat verbunden.

Erfindungsgemäß weist die Antriebseinrichtung eine erste Antriebs-Masseneinrichtung und eine zweite Antriebs-Masseneinrichtung auf, wobei die Schwerpunkte der ersten Antriebs-Masseneinrichtung und der zweiten Antriebs-Masseneinrichtung im Ruhezustand ebenfalls im gemeinsamen Massenschwerpunkt zusammenfallen.

Erfindungsgemäß weist die erste Antriebs-Masseneinrichtung ein erstes Antriebs-Massenelement und ein zweites Antriebs-Massenelement und die zweite Antriebs-Masseneinrichtung ein drittes Antriebs-Massenelement und ein viertes Antriebs-Massenelement auf, welche über einen jeweiligen Kammantrieb einzeln antreibbar sind.

Erfindungsgemäß sind das erste und zweite Antriebs-Massenelement über fünfte Federn, die entlang der ersten Achse hart und entlang der zweiten Achse weich ausgebildet sind, mit dem ersten Coriolis-Massenelement verbunden und über sechste Federn, die entlang der ersten Achse weich und entlang der zweiten Achse hart ausgebildet sind, mit dem Substrat verbunden. Gleichzeitig sind das dritte und vierte Antriebs-Massenelement über siebente Federn, die entlang der ersten Achse hart und entlang der zweiten Achse weich ausgebildet sind, mit dem zweiten Coriolis-Massenelement verbunden und über achte Federn, die entlang der ersten Achse weich und entlang der zweiten Achse hart ausgebildet sind, mit dem Substrat verbunden.

Gemäß einer weiteren bevorzugten Weiterbildung weist das erste Coriolis-Massenelement die Gestalt eines geschlossenen polygonalen Rahmens, vorzugsweise eines im wesentlichen quadratischen Rahmens, auf.

Gemäß einer weiteren bevorzugten Weiterbildung ist das zweite Coriolis-Massenelement innerhalb des ersten Coriolis-Massenelements angeodnet und weist eine polygonale Gestalt, vorzugsweise eine im wesentlichen quadratische Gestalt, auf.

Gemäß einer weiteren bevorzugten Weiterbildung sind das erste Coriolis-Massenelement und das zweite Coriolis-Massenelement durch die Antriebseinrichtung zu gegenphasigen Schwingungen entlang einer ersten Achse antreibbar und die erste Erfassungs-Masseneinrichtung und die zweite Erfassungs-Masseneinrichtung aufgrund der wirkenden Coriolis-Kraft in verschiedene Richtungen entlang der zweiten Achse auslenkbar.

Gemäß einer weiteren bevorzugten Weiterbildung weisen die erste Erfassungs-Masseneinrichtung ein erstes Erfassungs-Massenelement und ein zweites Erfassungs-Massenelement und die zweite Erfassungs-Masseneinrichtung ein drittes Erfassungs-Massenelement und ein viertes Erfassungs-Massenelement auf, die jeweils eine Mehrzahl von Fingern haben, die entlang der zweiten Achse angeordnet sind, und daß an den Fingern bewegliche Elektroden vorgesehen sind, welche mit auf dem Substrat fest verankerten Elektroden zur Erfassung der Auslenkungen zusammenwirken.

Gemäß einer weiteren bevorzugten Weiterbildung sind das erste Antriebs-Massenelement und das dritte Antriebs-Massenelement sowie das zweite Antriebs-Massenelement und das vierte Antriebs-Massenelement paarweise durch eine jeweilige Verbindungsfeder, welche entlang der ersten Achse weich und vorzugsweise entlang der zweiten Achse hart ausgebildet ist, miteinander gekoppelt.

Gemäß einer weiteren bevorzugten Weiterbildungsind das erste Erfassungs-Massenelement und das dritte Erfassungs-Massenelement sowie das zweite Erfassungs-Massenelement und das vierte Erfassungs-Massenelement paarweise durch eine jeweilige Verbindungsfeder, welche vorzugsweise entlang der ersten Achse hart und entlang der zweiten Achse weich ausgebildet ist, miteinander gekoppelt.

Gemäß einer weiteren bevorzugten Weiterbildung ist eine mechanische Kopplung entlang der x-Achse und entlang der y-Achse durch eine Koppelfedereinrichtung zwischen den Coriolis-Massenelementen vorgesehen, wobei die Koppelfedereinrichtung entlang der x-Achse und entlang der y-Achse weich gestaltet ist.

### ZEICHNUNGEN

Ein Ausführungsbeispiel der Erfindung ist in den Zeichnungen dargestellt und in der nachfolgenden Beschreibung näher erläutert.

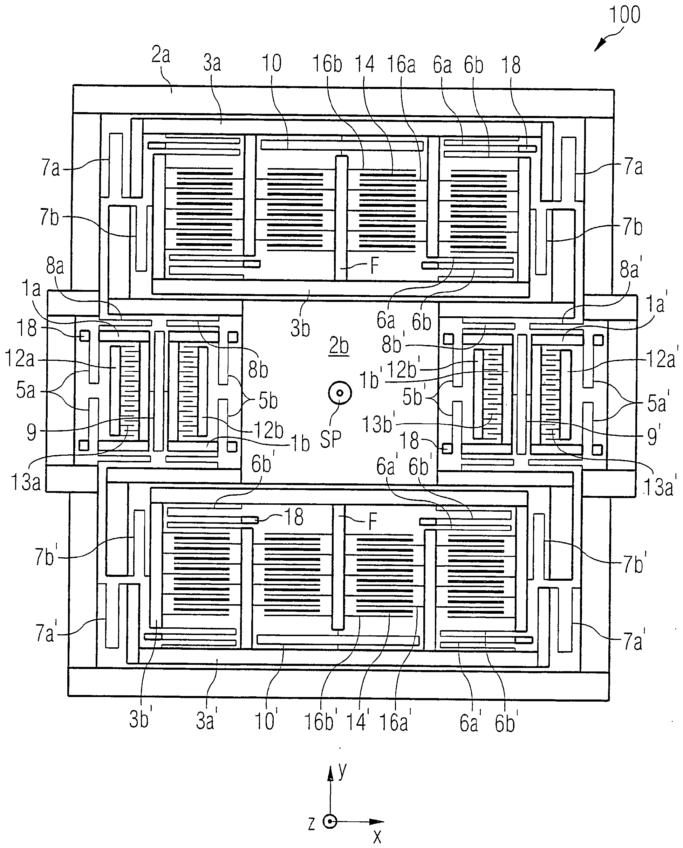

- Fig. 1: zeigt eine schematische Draufsicht auf eine Ausführungsform des erfindungsgemäßen mikromechanischen Drehratensensors.

### BESCHREIBUNG DER AUSFÜHRUNGSBEISPIELE

Fig. 1 zeigt eine schematische Draufsicht auf eine Ausführungsform des erfindungsgemäßen mikromechanischen Drehratensensors.

Es sollte hier erwähnt werden, dass aus Gründen der Übersichtlichkeit nicht sämtliche entsprechende Elemente in Figur 1 mit Bezugszeichen versehen worden sind.

In Figur 1 bezeichnet 1a ein erstes Antriebs-Massenelement, 1a' ein zweites Antriebs-Massenelement, 1b ein drittes Antriebs-Massenelement und 1b' ein viertes Antriebs-Massenelement. 2a ist ein erstes Coriolis-Massenelement und 2b ein zweites Coriolis-Massenelement. 3a bezeichnet ein erstes Erfassungs-Massenelement, 3a' ein zweites Erfassungs-Massenelement, 3b ein drittes Erfassungs-Massenelement und 3b' ein viertes Erfassungs-Massenelement.

Wie aus Figur 1 deutlich hervorgeht, sind sämtliche funktionellen Massenelemente 1a, 1a', 1b, 1b', 2a, 2b, 3a, 3a', 3b, 3b' derart symmetrisch angeordnet, dass ihr Schwerpunkt in einem gemeinsamen Masseschwerpunkt SP zusammenfällt, welcher im Zentrum der Schwingstruktur liegt. Alle Einzelmassen sind beweglich über dem Substrat 100 aufgehängt. Der gewählte symmetrische Aufbau sorgt neben der Einstellung des gemeinsamen Masseschwerpunkts auch für eine Unempfindlichkeit gegenüber Prozesstoleranzen.

Im Folgenden wird zunächst der Antrieb des ersten und zweiten Coriolis-Massenelements 2a, 2b beschrieben, von denen das erste 2a eine geschlossene Rahmenstruktur aufweist und das zweite 2b eine im Wesentlichen quadratische Form mit daran angehängten rechtwinklingen Winkelfortsätzen aufweist.

Die Antriebs-Massenelemente 1a, 1b bzw. 1a', 1b' sind über eine jeweilige Verbindungsfeder 9 bzw. 9' aneinander gekoppelt. Die Verbindungsfeder 9 bzw. 9' ist entlang einer ersten Achse x weich gestaltet und vorzugsweise entlang einer zweiten dazu senkrechten Achse y hart gestaltet. Die Achsen x, y bilden eine Ebene, welche parallel zur Ebene eines betreffenden Substrats 100 verläuft, über dem die Schwingstruktur aufgehängt ist. Senkrecht aus der Zeichenebene heraus, also als Normale zur Substratoberfläche, ist die Z-Achse orientiert, um die die Drehrate nach dem Coriolis-Prinzip erfasst werden soll.

Jedes der Antriebs-Massenelemente 1a, 1b, 1a', 1b' weist einen zugehörigen Kammantrieb auf, mit welchem eine Linearbewegung entlang der x-Achse angeregt werden kann. Der jeweilige Kammantrieb umfasst feste Elektroden 12a, 12b, 12a', 12b', welche auf dem Substrat 100 verankert sind, sowie bewegliche Elektroden 13a, 13b, 13a', 13b', welche an den betreffenden Antriebs-Massenelementen 1a, 1b, 1a', 1b' angebracht sind.

Die Antriebs-Massenelemente 1a, 1b, 1a', 1b' sind auf der der Verbindungsfeder 9 bzw. 9' abgewandten Seite über Verankerungsfedern 5a, 5b, 5a', 5b' auf dem Substrat 100 verankert. Bezugszeichen 18 bezeichnet Verankerungen für die Federn 5a, 5b, 5a', 5b'. Diese Verankerungsfedern 5a, 5b, 5a', 5b' sind entlang der x-Achse weich und vorzugsweise entlang der y-Achse hart gestaltet, um eine Auslenkung der Antriebs-Massenelemente 1a, 1a', 1b, 1b' entlang der y-Achse zu vermeiden und quasi nur eine eindimensionale Bewegung entlang der x-Achse zu ermöglichen.

Mittels Verbindungsfedern 8a, 8a' sind das erste bzw. zweite Antriebs-Massenelement 1a bzw. 1a' an ihren Längsenden jeweils mit dem äußeren rahmenförmigen Coriolis-Massenelement 2a verbunden. Diese Federn 8a, 8a' sind derart gestaltet, dass sie entlang der x-Achse hart und entlang der y-Achse weich sind. Dementsprechend folgt das Coriolis-Massenelement 2a der x-Bewegung der Antriebs-Massenelemente 1a bzw. 1a'.

In analoger Weise sind die Längsenden der Antriebs-Massenelemente 1b, 1b' über Verbindungsfedern 8b, 8b' mit den Winkelfortsätzen des zweiten Coriolis-Massenelements 2b verbunden. Auch diese Verbindungsfedern 8b, 8b' sind entlang der x-Achse hart und entlang der y-Achse weich ausgebildet. Daher folgt das Coriolis-Massenelement 2b der x-Bewegung der Antriebs-Massenelemente 1b, 1b'.

Somit lässt sich ein symmetrischer Antrieb der Coriolis-Massenelemente 2a, 2b bewerkstelligen, welcher - wie später erläutert wird - zweckmäßigerweise derart ausgelegt ist, dass er gegenphasige Schwingungen der Coriolis - Massenelemente 2a, 2b bewirkt.

Als Nächstes werden die Erfassungs-Massenelemente 3a, 3a', 3b, 3b' näher erläutert. Die Erfassungs-Massenelemente 3a, 3a', 3b, 3b' weisen jeweils eine Mehrzahl von Fingern F auf, welche ineinander greifen und welche hinsichtlich der Erfassungs-Massenelemente 3a, 3b bzw. 3a', 3b' gegeneinander gerichtet sind. Die Erfassungs-Massenelemente 3a, 3b bzw. 3a', 3b' sind in ihrer Mitte jeweils über eine Verbindungsfeder 10 bzw. 10' miteinander verbunden. Die Verbindungsfeder 10 bzw. 10' ist entlang der y-Achse weich gestaltet und vorzugsweise entlang der x-Achse hart gestaltet. Die einzelnen Finger F sind entlang der y-Achse orientiert, und weisen bewegliche Elektroden 16a, 16b, 16a', 16b' auf, welche mit auf dem Substrat 100 fest verankerten Elektroden 14, 14' zur Erfassung der Auslenkungen entlang der y-Achse nach dem Differentialkondensator-Prinzip zusammenwirken.

Das erste und zweite Erfassungs-Massenelement 3a, 3a' ist über jeweilige Verbindungsfedern 7a, 7a' an seinen Längsenden mit dem ersten Coriolis-Massenelement 2a verbunden. Diese Federn 7a, 7a' sind entlang der x-Achse weich ausgebildet und entlang der y-Achse hart ausgebildet.

In analoger Weise sind das dritte Erfassungs-Massenelement 3b und das vierte Erfassungs-Massenelement 3b' durch Verbindungsfedern 7b, 7b' mit den Winkelfortsätzen des zweiten Coriolis-Massenelements 2b verbunden. Auch diese Verbindungsfedern 7b, 7b' sind entlang der x-Achse weich und entlang der y-Achse hart ausgebildet. Diese Federn 7a, 7a', 7b, 7b' ermöglichen, dass die entlang der y-Achse auf die Coriolis-Massenelemente 2a, 2b wirkende Coriolis-Kraft auf die Erfassungs-Massenelemente 3a, 3a', 3b, 3b' übertragen wird. Verankerungsfedern 6a, 6b, 6a', 6b', mit denen die Erfassungs-Massenelemente 3a, 3a', 3b, 3b' mit dem Substrat 100 verbunden sind; verhindern andererseits, dass die Antriebsbewegung entlang der x-Achse auf die Erfassungs-Massenelemente 3a, 3a', 3b, 3b' übertragen wird. Bezugszeichen 18 bezeichnet Verankerungen für die Federn 6a, 6b, 6a', 6b'.

Nach alledem weist die vorliegende Struktur eine doppelte Entkopplung der Coriolis-Massenelemente 2a, 2b einerseits gegenüber dem Antrieb und andererseits gegenüber der Erfassung auf.

In der vorliegenden Sensorstruktur erfolgt die Detektion an einer ruhenden Struktur, was bedeutet, dass der Teil der Massen, das heißt die Erfassungs-Massenelemente, welche eine Elektrode der Plattenkondensator-Anordnung bildet, im Wesentlichen keine Antriebsbewegung ausführt. Der hier beschriebene Drehratensensore ist ein Linearschwinger-System, bei dem sowohl der Antrieb als auch die Detektion in der Substratebene erfolgen.

Wie bereits oben angedeutet, erfolgt die Anregung der Struktur bevorzugt im antiparallelen Antriebsmode, was bedeutet, dass sich die Antriebs-Massenelemente 1a und 1b bzw. 1a' und 1b' und demzufolge auch die Coriolis - Massenelemente 2a, 2b gegenphasig bewegen. Die bei einer äußeren Drehrate um die Z-Achse auftretenden Coriolis-Beschleunigungen sind dann ebenfalls gegenphasig und führen bei geeigneter Auslegung der Strukturen zu einer Anregung eines antiparallelen Erfassungsmodus. Mit anderen Worten werden bei einer bestimmten Drehrichtung die Erfassungs-Massenelemente 3a und 3a' in die positive y-Richtung und 3b und 3b' in die negative y-Richtung ausgelenkt.

Der dadurch erzeugte erwünschte Messeffekt kann dann durch geeignete Auswertung direkt unterschieden werden von einem unerwünschten Störeffekt, welcher durch eine äußere Linearbeschleunigung in y-Richtung oder einer Zentrifugalbeschleunigung hervorgerufen wird, welche jeweils gleichphasig auf die Erfassungs-Massenelemente beider Teilstrukturen wirken würden.

Hinzu kommt, daß eine Drehbeschleunigung um die Sensierachse zur keiner Auslenkung der Erfassungs-Massenelemente in der Sensierrichtung führt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Die Coriolis-Massenelemente können, müssen aber nicht, zur weiteren Stabilisierung über zusätzliche Federn am Substrat aufgehängt sein.

Die Antriebs-Massenelemente können auch indirekt über Federn zwischen den Erfassungs-Massenelementen so verbunden sein, dass eine mechanische Kopplung beider Teilstrukturen in Antriebsrichtung vorliegt und es zur Ausbildung von parallelen und antiparallelen Schwingungsmoden in x-Richtung kommt.

Die Erfassungs-Massenelemente andererseits können auch indirekt über Federn zwischen den Antriebs-Massenelementen derart verbunden sein, dass eine mechanische Kopplung beider Teilstrukturen in Detektionsrichtung vorliegt und es zur Ausbildung von parallelen und antiparallelen Schwingungsmoden kommt.

Die Auslegung der an der beweglichen Struktur verbundenen Plattenkondensator-Strukturen kann mit oder ohne Mittelsteg erfolgen. Ein Mittelsteg dient zur Vermeidung von Kammfinger-Schwingungen, welche zu unerwünschten Signalschwankungen in der elektrischen Auswertung führen können.

Eine mechanische Kopplung in Antriebsrichtung und in Erfassungsrichtung kann auch durch geeignete Koppelfederkonstruktionen zwischen den Coriolis-Massenelementen erzielt werden, wobei diese Koppelfederkonstruktionen in Antriebsrichtung und in Erfassungsrichtung weich zu gestalten sind.

Die Einzelmassen sind bevorzugt als geschlossene Rahmenstrukturen ausgelegt, was die Stabilität erhöht und dafür sorgt, dass die Frequenz der unerwünschten Out-of-plane-Schwingungsmoden in einem günstigeren Bereich liegt.

Bei einer Ausführung der Massen als offene Rahmenstrukturen ist bevorzugt ein Momentenausgleich durch eine geeignete Wahl der Federanknüpfungspunkte als auch eine geeignete Auslegung der Rahmen erreichbar.

Die Massenelemente können perforiert (als Fachwerk) oder nicht-perforiert ausgelegt sein.

## Patentansprüche

1. Mikromechanischer Drehratensensor mit:
einem ersten Coriolis-Massenelement (2a) und einem zweiten Coriolis-Massenelement (2b), welche über einer Oberfläche eines Substrats (100) angeordnet sind;
einer Antriebseinrichtung, durch die das erste Coriolis-Massenelement (2a) und das zweite Coriolis-Massenelement (2b) zu Schwingungen entlang einer ersten Achse (x) antreibbar sind; und
einer Erfassungseinrichtung, durch die Auslenkungen des ersten Coriolis-Massenelements (2a) und des zweiten Coriolis-Massenelements (2b) entlang einer zweiten Achse (y), die senkrecht zur ersten Achse (x) ist, aufgrund einer entsprechend wirkenden Coriolis-Kraft erfaßbar sind;
wobei
die erste Achse (x) und die zweite Achse (y) parallel zur Oberfläche des Substrats (100) verlaufen;
die Erfassungseinrichtung eine erste Erfassungs-Masseneinrichtung (3a, 3a') und eine zweite Erfassungs-Masseneinrichtung (3b, 3b') aufweist; und
die Schwerpunkte des ersten Coriolis-Massenelements (2a), des zweiten Coriolis-Massenelements (2b), der ersten Erfassungs-Masseneinrichtung (3a, 3a') und der zweiten Erfassungs-Masseneinrichtung (3b, 3b') im Ruhezustand in einem gemeinsamen Massenschwerpunkt (SP) zusammenfallen, **dadurch gekennzeichnet, daß** die Antriebseinrichtung eine erste Antriebs-Masseneinrichtung (1a, 1a') und eine zweite Antriebs-Masseneinrichtung (1b, 1b') aufweist und die Schwerpunkte der ersten Antriebs-Masseneinrichtung (1a, 1a') und der zweiten Antriebs-Masseneinrichtung (1b, 1b') im Ruhezustand ebenfalls im gemeinsamen Massenschwerpunkt (SP) zusammenfallen, wobei die erste Antriebs-Masseneinrichtung (1a, 1a') ein erstes Antriebs-Massenelement (1a) und ein zweites Antriebs-Massenelement (1a') und die zweite Antriebs-Masseneinrichtung (1b, 1b') ein drittes Antriebs-Massenelement (1b) und ein viertes Antriebs-Massenelement (1b') aufweist, welche über einen jeweiligen Kammantrieb (12a, 12b, 13a, 13b, 12a', 12b', 13a', 13b') einzeln antreibbar sind, wobei das erste und zweite Antriebs-Massenelement (1a, 1a') über fünfte Federn (8a, 8a'), die entlang der ersten Achse (x) hart und entlang der zweiten Achse (y) weich ausgebildet sind, mit dem ersten Coriolis-Massenelement (2a) verbunden sind und über sechste Federn (5a, 5a'), die entlang der ersten Achse (x) weich und entlang der zweiten Achse (y) hart ausgebildet sind, mit dem Substrat (100) verbunden sind; und
das dritte und vierte Antriebs-Massenelement (1b, 1b') über siebente Federn (8b, 8b'), die entlang der ersten Achse (x) hart und entlang der zweiten Achse (y) weich ausgebildet sind, mit dem zweiten Coriolis-Massenelement (2b) verbunden sind und über achte Federn (5b, 5b'), die entlang der ersten Achse (x) weich und entlang der zweiten Achse (y) hart ausgebildet sind, mit dem Substrat (100) verbunden sind.

2. Mikromechanischer Drehratensensor nach Anspruch 1, **dadurch gekennzeichnet, daß**
die erste Erfassungs-Masseneinrichtung (3a, 3a') über erste Federn (7a, 7a'), die entlang der ersten Achse (x) weich und entlang der zweiten Achse (y) hart ausgebildet sind, mit dem ersten Coriolis-Massenelement (2a) verbunden ist und über zweite Federn (6a, 6a'), die entlang der ersten Achse (x) hart und entlang der zweiten Achse (y) weich ausgebildet sind, mit dem Substrat (100) verbunden ist; und die zweite Erfassungs-Masseneinrichtung (3b, 3b') über dritte Federn (7b, 7b'), die entlang der ersten Achse (x) weich und entlang der zweiten Achse (y) hart ausgebildet sind, mit dem zweiten Coriolis-Massenelement (2b) verbunden ist und über vierte Federn (6b, 6b'), die entlang der ersten Achse (x) hart und entlang der zweiten Achse (y) weich ausgebildet sind, mit dem Substrat (100) verbunden ist.

3. Drehratensensor nach einem der vorhergehenden Ansprüche, **dadurch gekennzeichnet, daß** das erste Coriolis-Massenelement (2a) die Gestalt eines geschlossenen polygonalen Rahmens, vorzugsweise eines im wesentlichen quadratischen Rahmens, aufweist.

4. Drehratensensor nach Anspruch 3, **dadurch gekennzeichnet, daß** das zweite Coriolis-Massenelement (2b) innerhalb des ersten Coriolis-Massenelements (2a) angeodnet ist und eine polygonale Gestalt, vorzugsweise eine im wesentlichen quadratische Gestalt, aufweist.

5. Drehratensensor nach Anspruch 2, **dadurch gekennzeichnet, daß** das erste Coriolis-Massenelement (2a) und das zweite Coriolis-Massenelement (2b) durch die Antriebseinrichtung zu gegenphasigen Schwingungen entlang einer ersten Achse (x) antreibbar sind und die erste Erfassungs-Masseneinrichtung (3a, 3a') und die zweite Erfassungs-Masseneinrichtung (3b, 3b') aufgrund der wirkenden Coriolis-Kraft in verschiedene Richtungen entlang der zweiten Achse (y) auslenkbar sind.

6. Drehratensensor nach einem der vorhergehenden Ansprüche, **dadurch gekennzeichnet, daß** die erste Erfassungs-Masseneinrichtung (3a, 3a') ein erstes Erfassungs-Massenelement (3a) und ein zweites Erfassungs-Massenelement (3a') und die zweite Erfassungs-Masseneinrichtung (3b, 3b') ein drittes Erfassungs-Massenelement (3b) und ein viertes Erfassungs-Massenelement (3b') aufweisen, die jeweils eine Mehrzahl von Fingern (F) haben, die entlang der zweiten Achse (y) angeordnet sind, und daß an den Fingern (F) bewegliche Elektroden (16a, 16b, 16a', 16b') vorgesehen sind, welche mit auf dem Substrat (100) fest verankerten Elektroden (14, 14') zur Erfassung der Auslenkungen zusammenwirken.

7. Drehratensensor nach einem der vorhergehenden Ansprüche, **dadurch gekennzeichnet, daß** das erste Antriebs-Massenelement (1a) und das dritte Antriebs-Massenelement (1b) sowie das zweite Antriebs-Massenelement (1a') und das vierte Antriebs-Massenelement (1b') paarweise durch eine jeweilige Verbindungsfeder (9, 9'), welche entlang der ersten Achse (x) weich und vorzugsweise entlang der zweiten Achse (y) hart ausgebildet ist, miteinander gekoppelt sind.

8. Drehratensensor nach einem der vorhergehenden Ansprüche 6 oder 7, **dadurch gekennzeichnet, daß** das erste Erfassungs-Massenelement (3a) und das dritte Erfassungs- Massenelement (3b) sowie das zweite Erfassungs-Massenelement (3a') und das vierte Erfassungs-Massenelement (3b') paarweise durch eine jeweilige Verbindungsfeder (10, 10'),
welche vorzugsweise entlang der ersten Achse (x) hart und entlang der zweiten Achse (y) weich ausgebildet ist, miteinander gekoppelt sind.

9. Drehratensensor nach einem der vorhergehenden Ansprüche, **dadurch gekennzeichnet, daß** eine mechanische Kopplung entlang der x-Achse und entlang der y-Achse durch eine Koppelfedereinrichtung zwischen den Coriolis-Massenelementen (2a, 2b) vorgesehen ist, wobei die Koppelfedereinrichtung entlang der x-Achse und entlang der y-Achse weich gestaltet ist.

## Claims

1. Micromechanical rate-of-rotation sensor comprising:
a first Coriolis mass element (2a) and a second Coriolis mass element (2b), which are arranged above a surface of a substrate (100);
a drive device, by means of which the first Coriolis mass element (2a) and the second Coriolis mass element (2b) can be driven to vibrate along a first axis (x); and
a detection device, by means of which deflections of the first Coriolis mass element (2a) and of the second Coriolis mass element (2b) along a second axis (y), which is perpendicular to the first axis (x), on account of a correspondingly acting Coriolis force can be detected,
wherein
the first axis (x) and the second axis (y) run parallel to the surface of the substrate (100);
the detection device has a first detection mass device (3a, 3a') and a second detection mass device (3b, 3b'); and
the centres of gravity of the first Coriolis mass element (2a), the second Coriolis mass element (2b), the first detection mass device (3a, 3a') and the second detection mass device (3b, 3b') coincide at a common mass centre of gravity (SP) in the rest state,
**characterized in that**
the drive device has a first drive mass device (1a, 1a') and a second drive mass device (1b, 1b'), and the centres of gravity of the first drive mass device (1a, 1a') and the second drive mass device (1b, 1b') likewise coincide at the common mass centre of gravity (SP) in the rest state, wherein the first drive mass device (1a, 1a') has a first drive mass element (1a) and a second drive mass element (1a'), and the second drive mass device (1b, 1b') has a third drive mass element (1b) and a fourth drive mass element (1b'), which can be driven individually via a respective comb drive (12a, 12b, 13a, 13b, 12a', 12b', 13a', 13b'), wherein the first and second drive mass element (1a, 1a') are connected to the first Coriolis mass element (2a) by fifth springs (8a, 8a'), which are designed to be hard along the first axis (x) and soft along the second axis (y), and are connected to the substrate (100) by sixth springs (5a, 5a'), which are designed to be soft along the first axis (x) and hard along the second axis (y); and the third and fourth drive mass element (1b, 1b') are connected to the second Coriolis mass element (2b) via seventh springs (8b, 8b'), which are designed to be hard along the first axis (x) and soft along the second axis (y), and are connected to the substrate (100) by eighth springs (5b, 5b'), which are designed to be soft along the first axis (x) and hard along the second axis (y).

2. Micromechanical rate-of-rotation sensor according to Claim 1, **characterized in that**
the first detection mass device (3a, 3a') is connected to the first Coriolis mass element (2a) by first springs (7a, 7a'), which are designed to be soft along the first axis (x) and hard along the second axis (y), and is connected to the substrate (100) by second springs (6a, 6a'), which are designed to be hard along the first axis (x) and soft along the second axis (y); and the second detection mass device (3b, 3b') is connected to the second Coriolis mass element (2b) by third springs (7b, 7b'), which are designed to be soft along the first axis (x) and hard along the second axis (y), and is connected to the substrate (100) by fourth springs (6b, 6b'), which are designed to be hard along the first axis (x) and soft along the second axis (y).

3. Rate-of-rotation sensor according to one of the preceding claims, **characterized in that** the first Coriolis mass element (2a) has the shape of a closed polygonal frame, preferably a substantially square frame.

4. Rate-of-rotation sensor according to Claim 3, **characterized in that** the second Coriolis mass element (2b) is arranged within the first Coriolis mass element (2a) and has a polygonal shape, preferably a substantially square shape.

5. Rate-of-rotation sensor according to Claim 2, **characterized in that** the first Coriolis mass element (2a) and the second Coriolis mass element (2b) can be driven by the drive device to vibrate in anti-phase along a first axis (x), and the first detection mass device (3a, 3a') and the second detection mass device (3b, 3b') can be deflected in different directions along the second axis (y) on account of the Coriolis force acting.

6. Rate-of-rotation sensor according to one of the preceding claims, **characterized in that** the first detection mass device (3a, 3a') has a first detection mass element (3a) and a second detection mass element (3a'), and the second detection mass device (3b, 3b') has a third detection mass element (3b) and a fourth detection mass element (3b'), which each have a plurality of fingers (F) that are arranged along the second axis (y), and **in that** movable electrodes (16a, 16b, 16a', 16b'), which interact with electrodes (14, 14') firmly anchored to the substrate (100) to detect the deflections, are provided on the fingers (F).

7. Rate-of-rotation sensor according to one of the preceding claims, **characterized in that** the first drive mass element (1a) and the third drive mass element (1b) and also the second drive mass element (1a') and the fourth drive mass element (1b') are coupled to each other in pairs by a respective connecting spring (9, 9'), which is designed to be soft along the first axis (x) and preferably hard along the second axis (y).

8. Rate-of-rotation sensor according to either of the preceding Claims 6 and 7, **characterized in that** the first detection mass element (3a) and the third detection mass element (3b) and also the second detection mass element (3a') and the fourth detection mass element (3b') are coupled to each other in pairs by a respective connecting spring (10, 10'), which is preferably designed to be hard along the first axis (x) and soft along the second axis (y).

9. Rate-of-rotation sensor according to one of the preceding claims, **characterized in that** a mechanical coupling along the x-axis and along the y-axis is provided by a coupling spring device between the Coriolis mass elements (2a, 2b), wherein the coupling spring device is configured so as to be soft along the x-axis and along the y-axis.

## Revendications

1. Capteur de vitesse de rotation micromécanique, avec:
un premier élément massique de Coriolis (2a) et un second élément massique de Coriolis (2b), qui sont disposés au-dessus d'une surface d'un substrat (100);
un dispositif d'entraînement, par lequel le premier élément massique de Coriolis (2a) et le second élément massique de Coriolis (2b) peuvent être entraînés en vibrations le long d'un premier axe (x); et
un dispositif de détection, par lequel des déports du premier élément massique de Coriolis (2a) et du second élément massique de Coriolis (2b) le long d'un deuxième axe (y), qui est perpendiculaire au premier axe (x), peuvent être détectés à cause d'une force de Coriolis agissant de façon correspondante;
dans lequel
le premier axe (x) et le deuxième axe (y) sont parallèles à la surface du substrat (100);
le dispositif de détection présente un premier dispositif massique de détection (3a, 3a') et un second dispositif massique de détection (3b, 3b'); et
les centres de gravité du premier élément massique de Coriolis (2a), du second élément massique de Coriolis (2b), du premier dispositif massique de détection (3a, 3a') et du second dispositif massique de détection (3b, 3b') coïncident dans l'état de repos en un centre de gravité massique commun (SP),
**caractérisé en ce que** le dispositif d'entraînement présente un premier dispositif massique d'entraînement (1a, 1a') et un deuxième dispositif massique d'entraînement (1b, 1b') et les centres de gravité du premier dispositif massique d'entraînement (1a, 1a') et du deuxième dispositif massique d'entraînement (1b, 1b') coïncident également dans l'état de repos au centre de gravité massique commun (SP), dans lequel le premier dispositif massique d'entraînement (1a, 1a') présente un premier élément massique d'entraînement (1a) et un deuxième élément massique d'entraînement (1a') et le deuxième dispositif massique d'entraînement (1b, 1b') présente un troisième élément massique d'entraînement (1b) et un quatrième élément massique d'entraînement (1b'), qui peuvent être entraînés individuellement par un entraînement par peigne respectif (12a, 12b, 13a, 13b, 12a', 12b', 13a', 13b'), dans lequel les premier et deuxième éléments massiques d'entraînement (1a, 1a') sont reliés au premier élément massique de Coriolis (2a) par l'intermédiaire de cinquièmes ressorts (8a, 8a'), qui sont durs le long du premier axe (x) et souples le long du deuxième axe (y) et sont reliés au substrat (100) par l'intermédiaire de sixièmes ressorts (5a, 5a'), qui sont souples le long du premier axe (x) et durs le long du deuxième axe (y); et les troisième et quatrième éléments massiques d'entraînement (1b, 1b') sont reliés au second élément massique de Coriolis (2b) par l'intermédiaire de septièmes ressorts (8b, 8b'), qui sont durs le long du premier axe (x) et souples le long du deuxième axe (y) et sont reliés au substrat (100) par l'intermédiaire de huitièmes ressorts (5b, 5b'), qui sont souples le long du premier axe (x) et durs le long du deuxième axe (y).

2. Capteur de vitesse de rotation micromécanique selon la revendication 1, **caractérisé en ce que** le premier dispositif massique de détection (3a, 3a') est relié au premier élément massique de Coriolis (2a) par l'intermédiaire de premiers ressorts (7a, 7a'), qui sont souples le long du premier axe (x) et durs le long du deuxième axe (y) et est relié au substrat (100) par l'intermédiaire de deuxièmes ressorts (6a, 6a'), qui sont durs le long du premier axe (x) et souples le long du deuxième axe (y); et le second dispositif massique de détection (3b, 3b') est relié au second élément massique de Coriolis (2b) par l'intermédiaire de troisièmes ressorts (7b, 7b'), qui sont souples le long du premier axe (x) et durs le long du deuxième axe (y), et est relié au substrat (100) par l'intermédiaire de quatrièmes ressorts (6b, 6b'), qui sont durs le long du premier axe (x) et souples le long du deuxième axe (y).

3. Capteur de vitesse de rotation selon l'une quelconque des revendications précédentes, **caractérisé en ce que** le premier élément massique de Coriolis (2a) présente la forme d'un cadre polygonal fermé, de préférence d'un cadre essentiellement carré.

4. Capteur de vitesse de rotation selon la revendication 3, **caractérisé en ce que** le second élément massique de Coriolis (2b) est disposé à l'intérieur du premier élément massique de Coriolis (2a) et présente une forme polygonale, de préférence une forme essentiellement carrée.

5. Capteur de vitesse de rotation selon la revendication 2, **caractérisé en ce que** le premier élément massique de Coriolis (2a) et le second élément massique de Coriolis (2b) peuvent être entraînés par le dispositif d'entraînement en vibrations de phase opposée le long d'un premier axe (x) et le premier dispositif massique de détection (3a, 3a') et le second dispositif massique de détection (3b, 3b') peuvent être déportés à cause de l'action de la force de Coriolis dans des directions différentes le long du deuxième axe (y).

6. Capteur de vitesse de rotation selon l'une quelconque des revendications précédentes, **caractérisé en ce que** le premier dispositif massique de détection (3a, 3a') présente un premier élément massique de détection (3a) et un deuxième élément massique de détection (3a') et le second dispositif massique de détection (3b, 3b') présente un troisième élément massique de détection (3b) et un quatrième élément massique de détection (3b'), qui comportent respectivement une multiplicité de doigts (F), qui sont disposés le long du deuxième axe (y), et **en ce qu'**il est prévu sur les doigts (F) des électrodes mobiles (16a, 16b, 16a', 16b'), qui coopèrent avec des électrodes (14, 14') fixement ancrées sur le substrat (100) pour la détection des déports.

7. Capteur de vitesse de rotation selon l'une quelconque des revendications précédentes, **caractérisé en ce que** le premier élément massique d'entraînement (la) et le troisième élément massique d'entraînement (1b) ainsi que le deuxième élément massique d'entraînement (1a') et le quatrième élément massique d'entraînement (1b') sont couplés l'un à l'autre par paires au moyen d'un ressort de liaison respectif (9, 9'), qui est souple le long du premier axe (x) et de préférence dur le long du deuxième axe (y).

8. Capteur de vitesse de rotation selon une des revendications précédentes 6 ou 7, **caractérisé en ce que** le premier élément massique de détection (3a) et le troisième élément massique de détection (3b) ainsi que le deuxième élément massique de détection (3a') et le quatrième élément massique de détection (3b') sont couplés l'un à l'autre par paires au moyen d'un ressort de liaison respectif (10, 10'), qui est de préférence dur le long du premier axe (x) et souple le long du deuxième axe (y).

9. Capteur de vitesse de rotation selon l'une quelconque des revendications précédentes, **caractérisé en ce qu'**il est prévu un couplage mécanique le long de l'axe (x) et le long de l'axe (y) au moyen d'un dispositif de ressort de couplage entre les éléments massiques de Coriolis (2a, 2b), dans lequel le dispositif de ressort de couplage est souple le long de l'axe (x) et le long de l'axe (y).
